# EUROPÄISCHE PATENTSCHRIFT

(11) **EP 1 367 372 B1**
(45) Veröffentlichungstag und Bekanntmachung des Hinweises auf die Patenterteilung: **23.11.2005**
(21) Anmeldenummer: 02100577.2
(22) Anmeldetag: 29.05.2002
(51) Int. Cl.: G01G 21/28, G01G 23/30

(54) **Windschutzvorrichtung für eine Waage und Waage mit Windschutz**
Wind protection device for a balance and balance with a wind protection device
Dispositif de protection contre le vent pour une balance et balance avec un dispositif de protection contre le vent

(43) Veröffentlichungstag der Anmeldung: 03.12.2003
(73) Patentinhaber: Mettler-Toledo GmbH, 8606 Greifensee (CH)
(72) Erfinder: Leisinger, Roger, 8044, Zürich (CH); Rotach, Hansjörg, 8307, Effretikon (CH)

(56) Entgegenhaltungen:
- CH-A- 677 029
- CH-A- 687 836
- DE-A- 3 741 313
- DE-A- 19 849 399
- DE-A- 19 948 754
- DE-U- 8 803 709
- DE-U- 29 912 867
- GB-A- 182 929
- US-A- 4 862 978

## Beschreibung

Die Erfindung betrifft eine Windschutzvorrichtung für eine Waage sowie eine mit dieser Vorrichtung versehene Waage.

Die Präzision einer Waage ist von verschiedenen Faktoren abhängig. Von Bedeutung sind Luftströmungen, die während einer Messung auf die im Wägeraum vorgesehene Waagschale einwirken. Zur Vermeidung störender Luftströmungen sind Waagen daher meist mit Vorrichtungen versehene, durch die der Wägeraum gegen Einwirkungen von Luftströmen geschützt wird.

Eine Windschutzvorrichtung dieser Art ist beispielsweise aus [1], Patentschrift CH-677 029 A5, bekannt. Die dort beschriebene Windschutzvorrichtung besteht aus vier oder mehr gelenkig miteinander verbundenen Teilwänden, von denen mindestens eine einen U-förmigen Rahmen aufweist, in den eine Platte oder Scheibe eingeschoben ist, die bei Bedarf, zum Einwägen oder Beschicken der Waage, entfernt werden kann. An der Oberkante der Teilwand, welche die Rückwand bildet, ist ferner ein Deckel angelenkt, mittels dessen der Wägeraum ebenfalls geöffnet werden kann.

Eine weitere, in [2], Patentschrift CH-687 836 A5, offenbarte Windschutzvorrichtung ist für Waagen vorgesehen, die einen Sockel mit einer damit verbundenen, feststehenden Rückwand und einer mittels Streben mit der Rückwand verbundenen Frontscheibe aufweisen. Ferner sind zwei, die Seitenwände bildende Schiebetüren vorgesehen, welche im Bereich der Vorderkanten Führungsmittel aufweisen, welche untere Längsführungen umgreifen.

Aus [3], Offenlegungsschrift DE 198 49 399 A1, ist eine Windschutzvorrichtung bekannt, die mittels einer Verriegelungsvorrichtung lösbar mit dem Sockel einer Waage verbindbar ist. Ferner erlaubt diese Vorrichtung ein einfaches Auswechseln von Windschutzscheiben, wodurch ein bequemes Reinigen der Vorrichtung ermöglicht wird.

Aus [4] und [5], Offenlegungsschriften DE 37 41 313 A1 und DE 199 48 754 A1, sind zudem Windschutzvorrichtungen mit motorisch betätigbaren Elementen bekannt.

Bei der in [4] beschriebenen Vorrichtung sind wenigstens zwei zylinderförmig gebogene Wandelemente vorgesehen, die zum Öffnen und Schliessen des Wägeraumes gegeneinander verschiebbar sind. Die aus [5] bekannte Vorrichtung weist wenigstens zwei Wandelemente auf, die unabhängig voneinander motorisch bewegbar sind.

Bei all den beschriebenen Windschutzvorrichtungen sind die Zugänge zum Wägeraum entweder fest vorgegeben oder vom Anwender durch Entfernen eines oder mehrerer Elemente der Vorrichtung zu schaffen.

Für den Anwender wäre es jedoch oft von Vorteil, wenn er die Windschutzvorrichtung, ohne das Entfernen einzelner Vorrichtungsteile, mit minimalem Aufwand seinen Bedürfnissen anpassen könnte.

Insbesondere wäre es von Vorteil, wenn er den Zugang zum Wägeraum selbst frei wählen könnte.

Der vorliegenden Erfindung liegt daher die Aufgabe zugrunde, eine derart verbesserte Windschutzvorrichtung sowie eine mit dieser Windschutzvorrichtung versehene Waage zu schaffen.

Diese Aufgabe wird mit einer Windschutzvorrichtung und einer Waage gelöst, welche die in den unabhängigen Ansprüchen angegebenen Merkmale aufweist. Vorteilhafte Ausgestaltungen der Erfindung sind in weiteren Ansprüchen angegeben.

Die erfindungsgemässe Windschutzvorrichtung weist einen den Wägeraum einer Waage, in welchem die Waagschale angeordnet ist, teilweise umfassenden, aus mindestens zwei flächigen Elementen bestehenden, windabweisenden Körper auf. Der Körper ist lose handhabbar in wenigstens zwei verschiedenen Stellungen positionierbar, in denen je wenigstens eine Öffnung für den Zugriff in den Wägeraum geschaffen wird. Der Körper lässt sich durch den Anwender dabei derart positionieren, dass die realisierbaren Öffnungen einen Zugriff in den Wägeraum aus unterschiedlichen Richtungen erlauben.

Die Windschutzvorrichtung, kann durch den Anwender daher mit einfachsten Massnahmen den vorliegenden Bedürfnissen angepasst werden. Dabei kann der Körper entweder direkt auf dem Waagengehäuse oder auf einem Sockel platziert werden.

Bei vorzugsweisen Ausgestaltungen des Körpers, beispielsweise in der Form eines L- oder V- oder U-Profils, kann dieser derart positioniert werden, dass ein Zugriff in den Wägeraum von vorn, von oben, von links oder von rechts oder von zwei Seiten gleichzeitig her möglich ist. Besonders vorteilhaft dabei ist, dass die erfindungsgemässe Windschutzvorrichtung in jeder der wählbaren Stellungen die Anforderungen an konventionelle Windschutzvorrichtungen insbesondere hinsichtlich Stabilität und Funktionalität vollständig erfüllt.

Der Körper besteht vorzugsweise aus wenigstens zwei fest oder gelenkig miteinander verbundenen, ebenen oder gekrümmten flächigen Elementen, die, wie die Bestandteile konventioneller Windschutzvorrichtungen, beispielsweise aus Glas, Kunststoff und/oder Metall gefertigt sind. Auch ist ein einstückig gefertigter Körper denkbar.

Im Rahmen der Erfindung ist auch eine Windschutzvorrichtung für eine Waage zu betrachten, die eine den Wägeraum nach einer Seite begrenzende Rückwand aufweist, welche aus einem das Umgebungslicht diffus transmittierenden Material, insbesondere Mattglas, gefertigt ist, so dass der Wägeraum vorteilhaft von hinten ausgeleuchtet werden kann, beziehungsweise das Umgebungslicht den Wägeraum durchfluten kann, andererseits jedoch hinter der Rückwand vorgesehene Teile der Waage nicht störend in Erscheinung treten. Eine solche Rückwand steht vorzugsweise annähernd senkrecht auf dem Wägeraumboden.

In einer bevorzugten Ausführungsform ist eine solche Rückwand mit einer Anzeige, insbesondere einer hintergrundbeleuchteten Flüssigkristallanzeige versehen. Dies erlaubt dem Anwender gleichzeitig auf die Waagschale beziehungsweise das Wägegut und die Anzeige zu blicken. Auch die Anordnung einer Beleuchtungsvorrichtung zur Beleuchtung der Rückwand von hinten kann vorgesehen werden.

Insbesondere kann die Erfindung dadurch ausgeführt werden, dass die Rückwand abnehmbar und gegen eine andere Rückwand auswechselbar ausgestaltet ist.

Die anhand des Körpers geschaffenen Öffnungen, durch die der Zugriff in den Wägeraum erfolgt, sind vorzugsweise durch weitere dreh- oder verschiebbare, windabweisende Elemente, beispielsweise Türelemente oder einen gegebenenfalls an der Rückwand angelenkten Deckel ganz oder teilweise verschliessbar. Die windabweisenden Elemente können dabei fest installiert oder durch den Anwender bei Bedarf montierbar sein. Insbesondere ist es zweckmässig, wenn der Körper in dessen Stellungen an das Gehäuse der Waage, den Sockel und/oder die Rückwand und/oder den Deckel angepasst ist.

Die gegebenenfalls motorisch angetriebenen dreh- oder verschiebbaren windabweisenden Elemente sind bei Nichtgebrauch vorzugsweise innerhalb einer mit der Rückwand verbundenen Kammer deponierbar. In einer bevorzugten Ausgestaltung ist der Körper faltbar und ebenfalls innerhalb der Kammer deponierbar.

Vorzugsweise wird der Körper in den wählbaren Stellungen fixiert. Dies kann mit einfachen Mitteln erfolgen. Beispielsweise können an angrenzenden Gehäuseteilen oder am Sockel Nuten, Kanten, Nocken oder Klammern vorgesehen sein. Möglich ist natürlich auch die Verwendung von Schrauben. Ferner kann das Gehäuse mit haftenden Schichten, beispielsweise Hartgummi, versehen sein, auf denen der positionierte Körper mittels Haftreibung gehalten wird. Der Körper kann jedoch auch durch sein Eigengewicht gehalten sein, so dass gegebenenfalls nur Positionshilfen vorgesehen sind, mittels derer der Körper rasch und präzise positionierbar ist.

In einer weiteren bevorzugten Ausgestaltung der Erfindung sind Sensoren, beispielsweise Schalter oder optoelektronische Bauelemente vorgesehen, mittels derer die gewählte Stellung des Körpers und/oder der installierte Körper selbst detektierbar sind. Die steuerbaren Elemente der Waage, wie motorisch angetriebene Türelemente, die Beleuchtungsvorrichtung oder die Anzeige sind daher entsprechend der gewählten Stellung des Körpers betätigbar, so dass ein optimaler Bedienungskomfort für den Anwender resultiert.

Nachfolgend wird die Erfindung anhand von Zeichnungen näher erläutert. Dabei zeigt:
- Figur 1: eine mit einer erfindungsgemässen Windschutzvorrichtung versehene Waage, deren Wägeraum, der durch einen U-profilförmigen Körper teilweise umfasst wird, durch Anheben eines Deckels von oben zugänglich ist,
- Figur 2: die Waage aus Figur 1, ohne den Körper, jedoch mit montierten Türelementen,
- Figur 3: den U-profilförmigen Körper aus Figur 1,
- Figur 4: einen L-profilförmigen Körper,
- Figur 5: den L-profilförmigen Körper aus Figur 4 in einer vorzugsweisen Ausgestaltung mit gegeneinander gefalteten Schenkeln,
- Figur 6: die Waage aus Figur 1 mit liegendem U-profilförmigem Körper, dessen Schenkel nach vorn gerichtet sind, und daher von vorn zugänglichem Wägeraum,
- Figur 7: die Waage aus Figur 1 mit stehendem U-profilförmigem Körper, dessen Schenkel seitlich auf den Sockel abgestützt sind, und daher von vorn zugänglichem Wägeraum,
- Figur 8: die Waage aus Figur 1 mit liegendem U-profilförmigem Körper, dessen Schenkel seitlich nach links gerichtet sind, und daher von der linken Seite her zugänglichem Wägeraum,
- Figur 9: die Waage aus Figur 1 mit liegendem L-profilförmigem Körper, dessen Schenkel die rechte Seite und die Frontseite der Windschutzvorrichtung bilden, und daher von der linken Seite her zugänglichem Wägeraum,
- Figur 10: die Waage aus Figur 1 mit U- profilförmigem Körper, dessen auf dem Sockel stehende Schenkel den Wägeraum frontseitig und rückseitig begrenzen und daher einen Zugriff in den Wägeraum von der linken und rechten Seite her erlauben, und
- Figur 11: eine weitere Ausführungsform der erfindungsgemässen Waage mit einer erfindungsgemässen Windschutzvorrichtung.

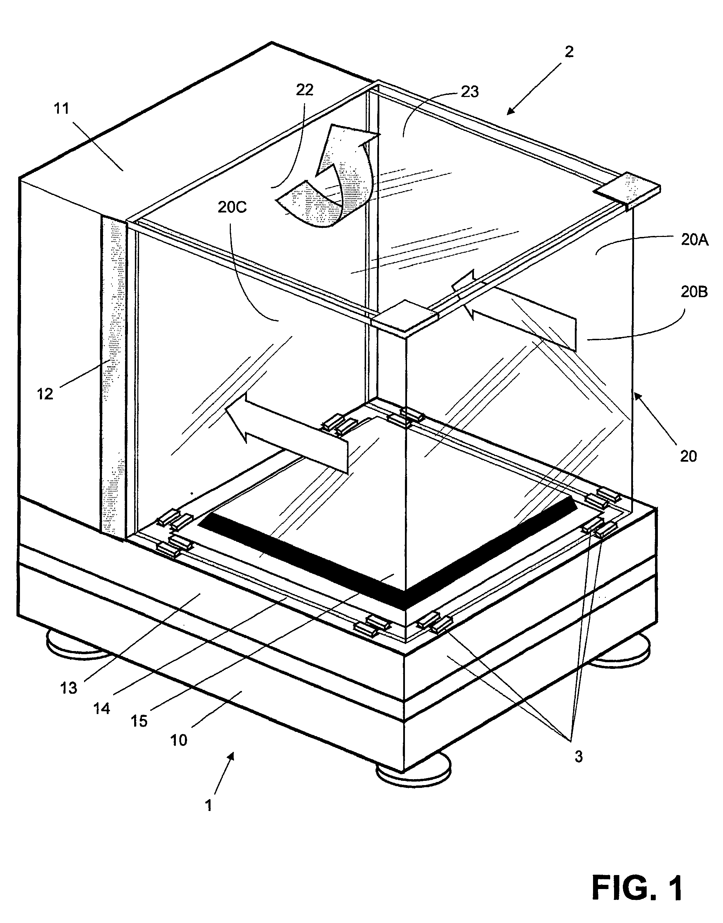

Figur 1 zeigt eine mit einer erfindungsgemässen Windschutzvorrichtung 2 versehene Waage 1, deren Wägeraum unten durch einen die Oberseite eines Sockels 13 bildenden Wägeraumboden 14, oben durch einen Deckel 23, hinten durch eine Rückwand 22 und vorn sowie seitlich durch einen U-profilförmigen Körper 20 begrenzt wird. Der U-profilförmige Körper 20, der Deckel 23, der Wägeraumboden 14 und die Rückwand 22 sind in ihrer Grösse aneinander angepasst, so dass dadurch der Wägeraum vollständig abgeschlossen wird. Zum Einwägen oder Beschicken der Waage 1 in der in Figur 1 gewählten Stellung des Körpers 20 ist daher der Deckel 23 anzuheben, wonach der Wägeraum von oben zugänglich ist.

Der auf dem Sockel 13 ruhende U-profilförmige Körper 20 weist drei flächige Elemente 20A, 20B, 20C auf, zwei gegen die Rückwand 22 gerichtete Schenkel 20A, 20C, welche durch ein den Wägeraum frontseitig begrenzendes Mittelstück 20B miteinander verbunden sind. Die Schenkel 20A, 20C und das Mittelstück 20B sind mittels Nocken 3, die auf dem Wägeraumboden 14 angeordnet sind, beidseitig gehalten.

Wie aus der Figur 1 ersichtlich, ist ferner ein die hier nicht sichtbare Wägezelle und die Wägeelektronik enthaltendes Waagengehäuse 10 vorhanden. Der Sockel 13, welcher eine Durchführung für den Durchtritt des die Waagschale 15 mit der Wägezelle verbindenden Lastübertragungsglieds (hier ebenfalls nicht sichtbar) besitzt, ist hier oberhalb des Waagengehäuses 10 angeordnet. Er kann mit dem Waagengehäuse 10 mittels Halterungen verbunden sein oder auch in das Waagengehäuse 10 integriert sein. Der Sockel 13, der vorwiegend als Auflage für den windabweisenden Körper 20 dient, kann jedoch auch unterhalb des Waagengehäuses angeordnet sein, beispielsweise als Stellfläche für die Waage 1 einerseits und andererseits als Auflage für den windabweisenden Körper 20 dienend.

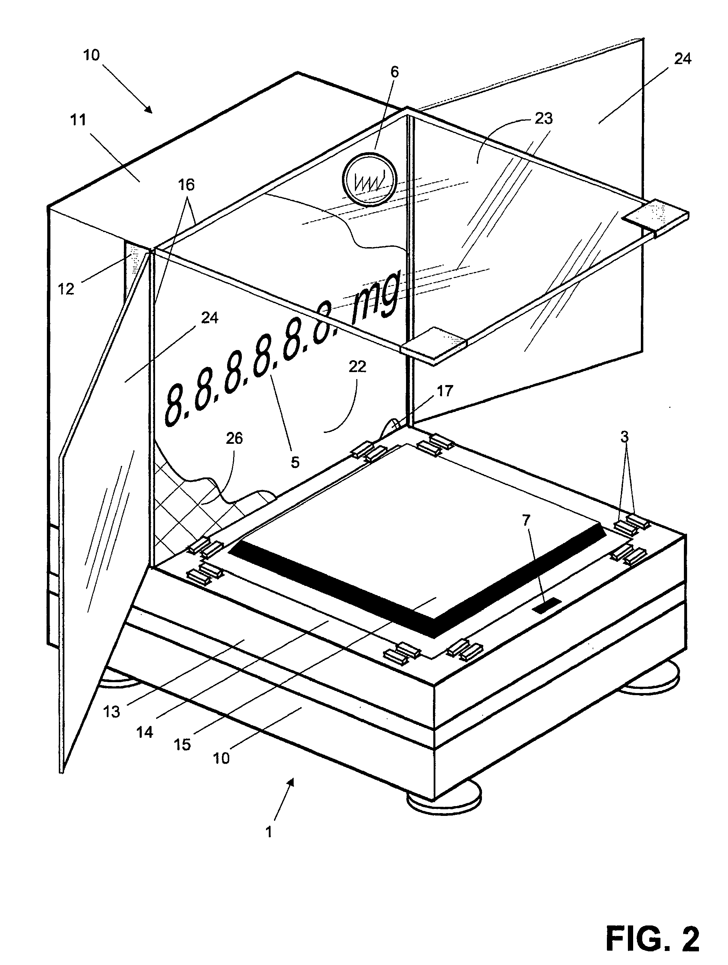

Aus Figur 1 ist ferner ersichtlich, dass der auf dem Gehäuse 10 der Waage 1 angeordnete Sockel 13 eine im rückwärtigen Teil der Waage 1 stehende Kammer 11 trägt. Innerhalb der Kammer 11 können beispielsweise elektronische Module oder, wie in Figur 2 gezeigt, eine Beleuchtungsvorrichtung 6 vorgesehen sein, welche die einen Teil der Kammer 11 bildende Rückwand 22 des Wägeraums beleuchtet. Die Kammer 11 ist ferner mit einem vorzugsweise verschliessbaren Zugang 12 versehen, durch den Teile der Windschutzvorrichtung 2 und/oder der gegebenenfalls faltbare Körper 20 in die Kammer 11 einführbar und dort deponierbar sind. Der Zugang 12 kann seitlich an der Kammer oder oberhalb derselben angebracht sein und kann in letzterem Fall zum Öffnen und Schliessen mit dem Deckel 23 verbunden sein.

Figur 2 zeigt eine Waage 1 ohne den U-profilförmigen Körper 20, welcher beispielsweise zur Reinigung des Wägeraums entfernt wurde. Zusätzlich oder alternativ zum U-profilförmigen Körper 20 können Türelemente 24 montiert werden, die gelenkig, beispielsweise mittels eines Scharniers 16, mit der Rückwand 22 verbunden sind. Ebenso kann der Deckel 23, wie in der Figur gezeigt, mit einem Scharnier 16 an der Rückwand 22 angelenkt sein.

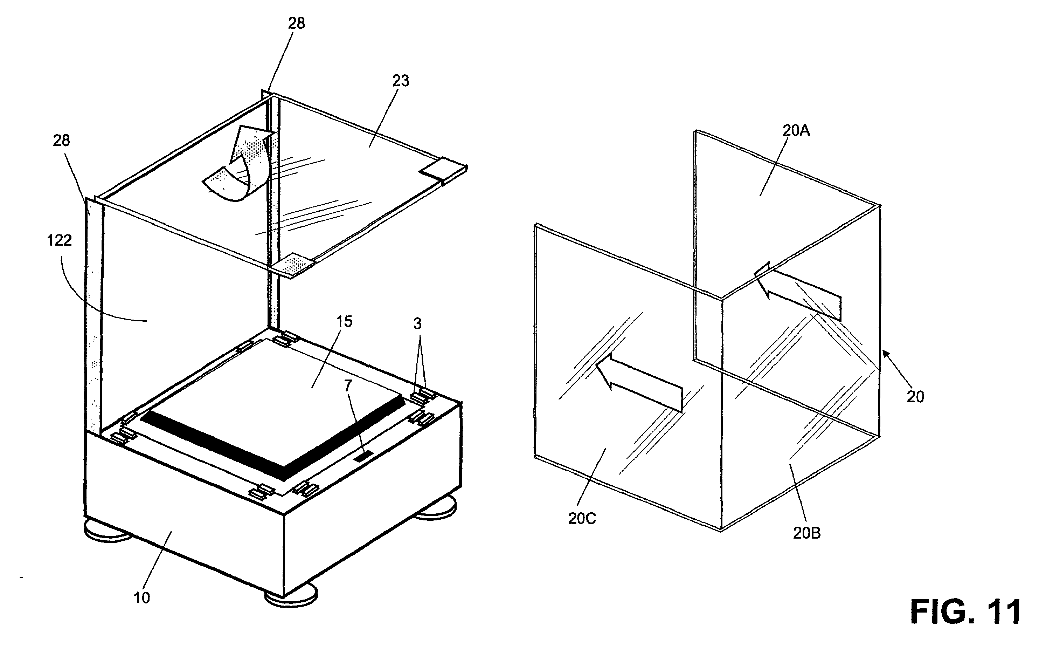

In der in Figur 2 gezeigten Ausgestaltung ist die Rückwand 22 aus einem das Umgebungslicht diffus transmittierenden Material 26, beispielsweise Mattglas, gefertigt, so dass der Wägeraum von hinten gleichmässig ausgeleuchtet wird. Von Vorteil ist hierbei die Lichtdurchflutung des Wägeraums einerseits und andererseits, dass gegebenenfalls hinter der Rückwand 22 vorgesehene Vorrichtungsteile, elektrische Module oder Kabel, nicht störend in Erscheinung treten. Eine weitere Ausführungsform einer solchen Rückwand wird weiter unten anhand der Figur 11 beschrieben.

Weiterhin ist die Rückwand 22 an ihrem unteren Rand mit einer Öffnung 17 versehen, die der Durchführung von elektrischen Kabeln oder sonstigen Zuleitungen dient, an die beispielsweise im Wägeraum zu verwendende Vorrichtungen anschliessbar sind. Der Zugang zum Wägeraum durch die Kabeldurchführungsöffnung 17 kann insbesondere dadurch erleichtert werden, dass die Rückwand 22 abnehmbar ausgestaltet ist, wie ebenfalls weiter unten anhand der Figur 11 beschrieben wird. Auch ist eine Anordnung einer oder mehrerer Kabeldurchführungsöffnungen 17, welche sich an einem seitlichen oder dem oberen Rand der Rückwand 22 befinden, denkbar.

Die Rückwand 22 ist ferner mit einer Anzeige 5, beispielsweise einer hintergrundbeleuchteten Flüssigkristallanzeige versehen, was in Kombination mit der erfindungsgemässen Windschutzvorrichtung 2 besonders vorteilhaft ist. Die in der Rückwand 22 vorgesehene Anzeige 5 kann beispielsweise das Wägeresultat ausgeben. Der Wägevorgang ist daher bequem durchführbar, da sich sowohl die Anzeige 5, als auch die Waagschale 15 mit dem Wägegut gleichzeitig im Blickfeld des Anwenders befinden.

LCD- und LED-Anzeigen sowie deren Beschaltung sind beispielsweise in [6], Mool C. Gupta, Handbook of Photonics, CRC Press, Boca Raton 1997, Seiten 782 - 793 und [7], U. Tietze, Ch. Schenk, Halbleiterschaltungstechnik, 11. Auflage, 1. Nachdruck, Springer Verlag, Berlin 1999, Seiten 1126 - 1129 und 1307-1308 beschrieben.

Wie in Figur 2 gezeigt, können ferner Sensoren 7, beispielsweise Schalter oder optoelektronische Bauelemente, vorgesehen sein, mittels derer die gewählte Stellung des Körpers 20, und/oder, sofern mehrere Körper 20, vorgesehen sind, der jeweils installierte Körper 20 detektierbar ist. Die steuerbaren Elemente der Waage 1, motorisch angetriebene windabweisende Elemente, beispielsweise der Deckel 23 oder die Türelemente 24, die Beleuchtungsvorrichtung 6 oder die Anzeige 5 sind daher entsprechend der gewählten Stellung des Körpers 20 betätigbar, so dass ein optimaler Bedienungskomfort für den Anwender resultiert. Optoelektronische Bauelemente, die als Sensoren bzw. Photodetektoren verwendbar sind, sind beispielsweise in [6], Seiten 301-302 und [7], Seiten 1299-1306 beschrieben.

Sofern die Windschutzvorrichtung 2 nicht benötigt wird, können deren Bestandteile, d.h. der U-profilförmige Körper 20, der Deckel 23 und die Türelemente 24, entfernt werden, was mit wenigen Handgriffen möglich ist, und wie oben bereits erwähnt, zumindest teilweise, in der Kammer 11 untergebracht werden.

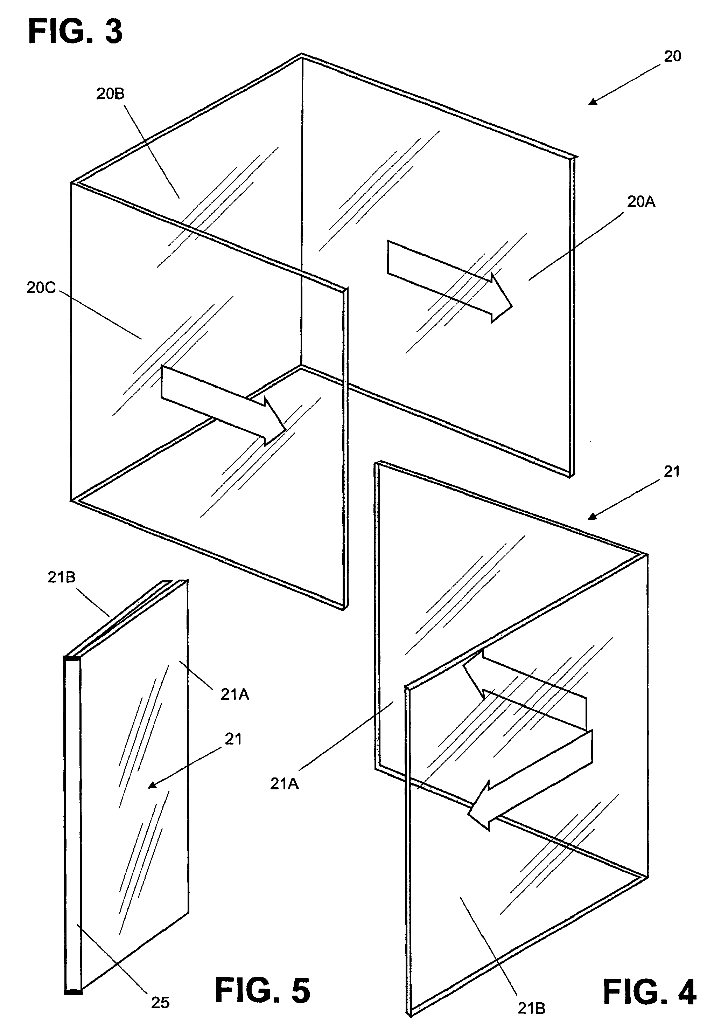

Der U-profilförmige Körper 20, der in Figur 3 gesondert dargestellt ist, kann, wie in den Figuren 1, 6, 7, 8 und 10 gezeigt, in mehreren Stellungen positioniert werden, in denen je wenigstens eine Öffnung für den Zugriff in den Wägeraum geschaffen wird. Aus den Figuren 1, 6, 7, 8 und 10 ist dabei ersichtlich, dass die resultierenden Öffnungen einen Zugriff in den Wägeraum aus unterschiedlichen Richtungen erlauben und in vorzugsweisen Ausgestaltungen zudem entweder mittels des Deckels 23 oder der Türelemente 24 verschliessbar sind, so dass verschiedene, einwandfrei funktionierende Konfigurationen der Windschutzvorrichtung 2 realisierbar sind. Die Windschutzvorrichtung 2 kann durch den Anwender daher mit einfachsten Massnahmen den vorliegenden Bedürfnissen angepasst werden.

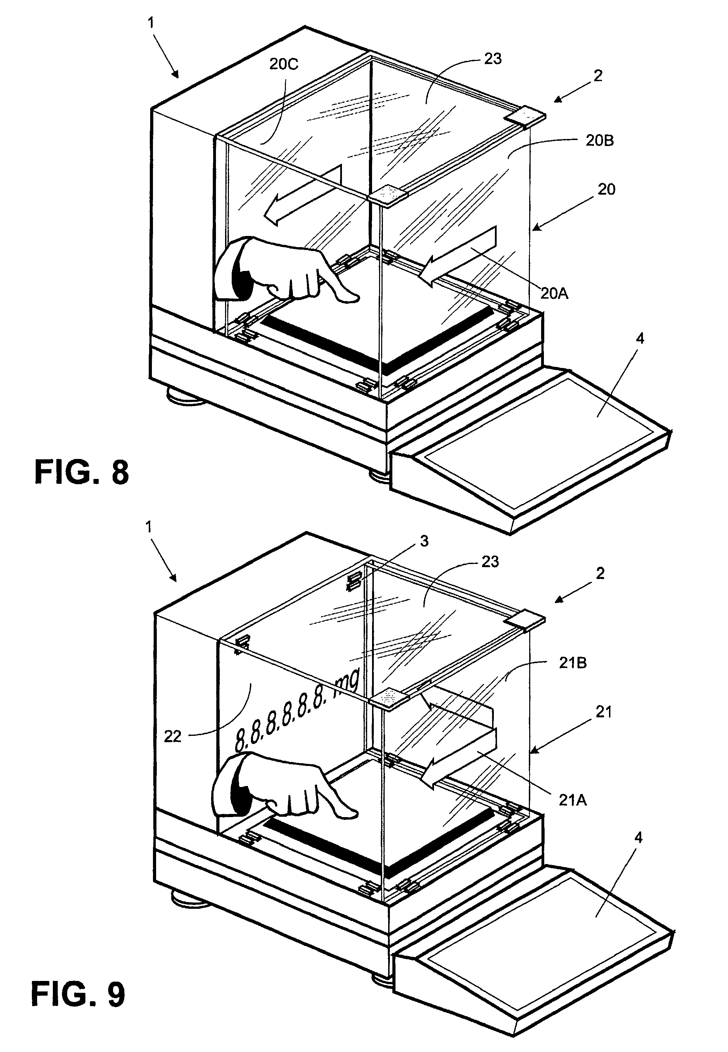

Der erfindungsgemäss in verschiedenen Stellungen positionierbare Körper, kann nebst der U-profilförmigen Ausgestaltung zahlreiche weitere Formen aufweisen. In den Figuren 4 und 9 weist der in verschiedenen Stellungen positionierbare Körper 21 ein L-Profil auf. Auch ein V-Profil ist für die Gestaltung eines erfindungsgemässen Körpers denkbar, insbesondere, wenn die Windschutzvorrichtung insgesamt dreieckförmig ausgestaltet ist.

Der in verschiedenen Stellungen positionierbare Körper 20, 21 kann einstückig, beispielsweise als Gussteil gefertigt sein oder aus zwei oder mehreren fest, beispielsweise mittels eines Klebstoffs, oder gelenkig miteinander verbundenen flächigen Elementen 20A, 20B, 20C; 21A, 21B bestehen.

Figur 5 zeigt zwei mittels eines Scharniers 25 miteinander verbundene flächige Elemente 21A, 21B, die zu einem L-profilförmigen Körper 21, wie er in Figur 4 gezeigt ist, aufgefaltet werden können.

Die flächigen Elemente 20A, 20B, 20C; 21A, 21B des Körpers 20, 21 können dabei verschiedene Formen aufweisen und aus verschiedenartigen Materialien, wie Glas, Kunststoff und/oder Metall gefertigt sein. Möglich ist beispielsweise auch die Verwendung von mit Glas- oder Kunststoffplatten bestückten Metallrahmen oder Eckprofilen. Die flächigen Elemente 20A, 20B, 20C; 21A, 21B sind vorzugsweise eben, können aber auch mit Krümmungen versehene Formen aufweisen.

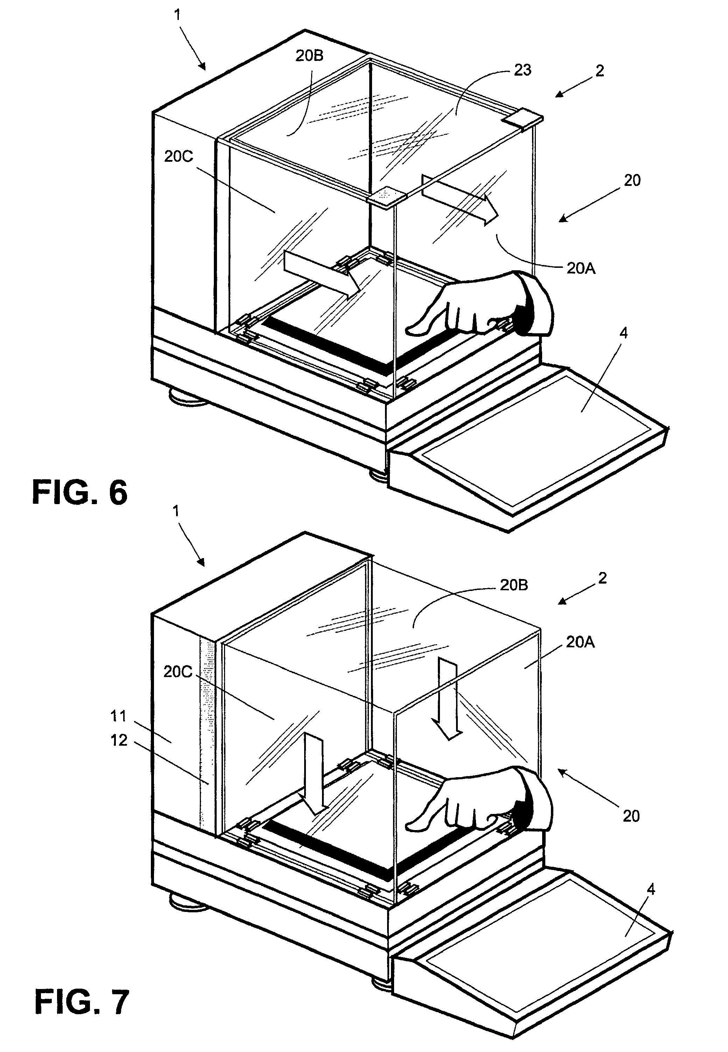

Besonders vorteilhaft ist die Kombination eines in verschiedenen Stellungen positionierbaren Körpers 20; 21 mit einem Gehäuse 10, wie es in den Figuren 1 bis 10 gezeigt ist. Die Rückwand 22 und der Sockel 13, die in der gezeigten Ausgestaltung senkrecht aufeinander stehen, bilden dabei eine ideale Ergänzung zum Körper 20; 21 in dessen wählbaren Stellungen, die anschliessend anhand der Figuren 6 bis 10 näher erläutert werden. Ferner ist die der Bedienung der Waage 1 dienende Tastatur 4 in den Figuren 6 bis 9 dargestellt.

Figur 6 zeigt die Waage 1 mit liegendem U-profilförmigem Körper 20, dessen Schenkel 20A, 20C nach vorn gerichtet sind (siehe die an den Schenkeln 20A, 20C aufgeklebten Pfeile). Der Wägeraum ist daher von vorn oder nach dem Anheben des Deckels 23 auch von oben zugänglich. Das Mittelstück 20 B liegt nahe der Rückwand 22.

Figur 7 zeigt die Waage 1 mit stehendem U-profilförmigem Körper 20, dessen Schenkel 20A, 20C seitlich auf den Sockel 13 abgestützt sind. Der Deckel 23 ist in der Darstellung demontiert und durch die Öffnung 12 in die Kammer 11 geschoben. Der Wägeraum ist von vorn zugänglich.

Figur 8 zeigt die Waage 1 mit liegendem, U-profilförmigem Körper 20, dessen Schenkel 20A, 20C seitlich nach links gerichtet sind. Der Wägeraum ist daher von der linken Seite oder nach dem Anheben des Deckels 23 auch von oben zugänglich.

Figur 9 zeigt die Waage 1 mit liegendem L-profilförmigem Körper 21, dessen Schenkel 21A und 21B die rechte Seite und die Frontseite der Windschutzvorrichtung 2 bilden. Der Wägeraum ist daher von der linken Seite oder nach dem Anheben des Deckels 23 auch von oben zugänglich. Figur 9 zeigt zudem, dass die Nocken 3 oder andere Befestigungsmittel auch an der Rückwand 22 angeordnet werden können.

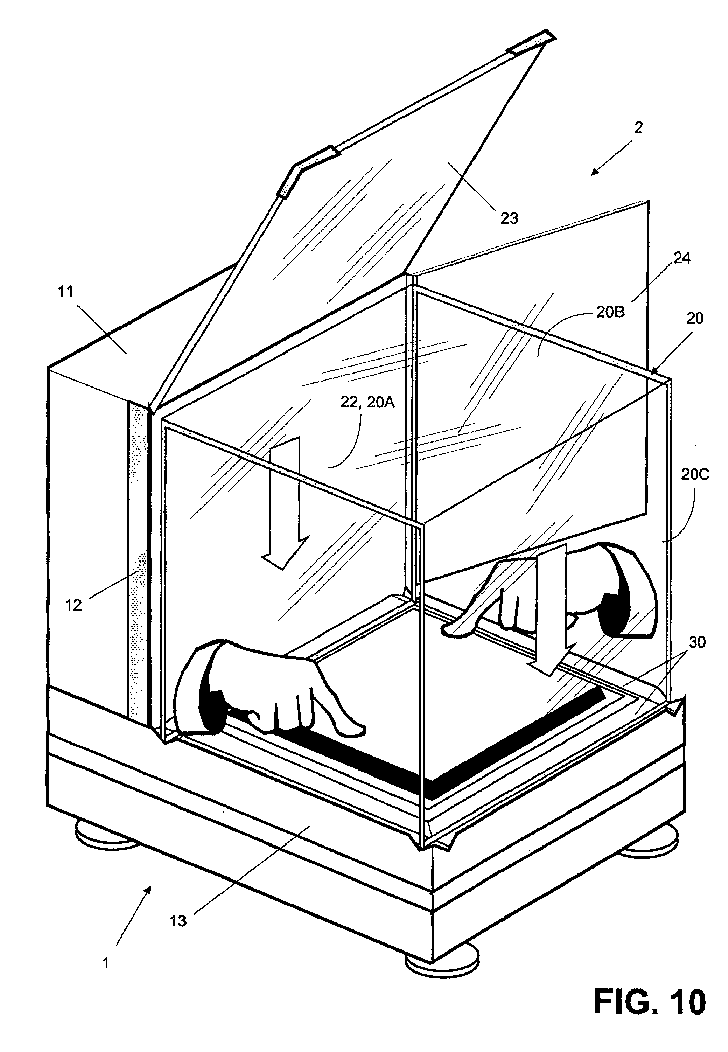

Figur 10 zeigt die Waage 1 mit U-profilförmigem Körper 20, dessen auf dem Sockel 13 stehende Schenkel 20A, 20C den Wägeraum frontseitig und rückseitig begrenzen. Ferner ist ein geöffnetes rechtes Türelement 24 und der angehobene Deckel 23 gezeigt, der in einer solchen Konfiguration der Windschutzvorrichtung 2 vorzugsweise demontiert und in der Kammer 11 deponiert wird. Der Zugriff in den Wägeraum ist daher, nach dem Öffnen des vorhandenen Türelementes 24, von der linken und rechten Seite her möglich. Im Übrigen ist es, insbesondere für eine Waage mit relativ niedriger Auflösung, nicht zwingend notwendig während des Wägevorgangs sämtliche Öffnungen der Windschutzvorrichtung 2 zum Wägeraum geschlossen zu halten.

In der in Figur 10 gezeigten Ausgestaltung wird der Körper 20 nicht durch Nocken 3, sondern durch Nuten oder Kanten 30 gehalten, welche hauptsächlich als Positionshilfen dienen, mittels derer eine rasche und präzise Positionierung des Körpers 20 möglich ist. Je nach Beschaffenheit des Körpers 20, 21, ob beispielsweise seine flächigen Elemente 20A, 20B, 20C; 21A, 21B fest oder flexibel miteinander verbunden sind, oder ob der Körper gar einstückig gefertigt ist, wird der Körper 20, 21 durch sein Eigengewicht auf dem Sockel 13 gehalten und es sind nur noch Vorrichtungen zu seiner Positionierung vonnöten.

Auch die Verwendung weiterer Befestigungs- oder Haltemittel ist möglich. Beispielsweise könnten auch Schrauben oder Klammern vorgesehen sein. Besonders vorteilhaft ist ferner die Verwendung haftender, beispielsweise aus Hartgummi bestehender Schichten, an denen der Körper 20, 21 beispielsweise mittels Haftreibung gehalten wird.

Grundsätzlich ist bei der Wahl der Befestigungsmittel zu beachten, dass diese die Reinigung der Waage 1 nicht behindern.

Die Figur 11 zeigt eine andere Ausgestaltung der Waage, bei welcher auf die Kammer 11 (siehe Figuren 1 bis 10) verzichtet wurde. Die Rückwand 122, welche, wie anhand der Figur 2 beschrieben wurde, aus Mattglas gefertigt sein kann, befindet sich zwischen zwei stehend angeordneten Leisten 28 und wird von diesen gehalten. Die Rückwand 122 kann nun nach oben aus den Leisten 28 herausgezogen werden und gegebenenfalls gegen eine andere, beispielsweise eine durchsichtige, aus Glas gefertigte Rückwand oder eine undurchsichtige, aus Metall gefertigte Rückwand ersetzt werden. Selbstverständlich kann die Rückwand 122 auch direkt am Waagengehäuse 10 befestigt oder in einer Führung gelagert sein. Die in der Figur 11 dargestellte Waage besitzt keinen Sockel, vielmehr dient die Oberseite des Wagengehäuses 10 als Auflagefläche für den Körper 20; 21 welcher, wie vorstehend beschrieben, in den verschiedensten Stellungen positioniert werden kann.

Die erfindungsgemässe Windschutzvorrichtung wurde in bevorzugten Ausgestaltungen beschrieben und dargestellt. Anhand der erfindungsgemässen Lehre sind jedoch weitere fachmännische Ausgestaltungen realisierbar. Insbesondere sind verschiedene Formen und Materialien zur Gestaltung des oder der verwendeten Körper möglich. Weiterhin kann selbstverständlich auch das Gehäuse der Waage eine andere Form aufweisen.

### Bezugszeichenliste

- 1: Waage
- 2: Windschutzvorrichtung
- 3: Befestigungsmittel
- 4: Eingabeeinheit
- 5: Anzeige
- 6: Beleuchtungsvorrichtung
- 7: Sensor
- 10: Gehäuse
- 11: Kammer
- 12: Zugang zu der Kammer 11
- 13: Sockel
- 14: Wägeraumboden
- 15: Waagschale
- 16: Scharnier
- 17: Kabeldurchführungsöffnung
- 20, 21: Körper
- 20A, 20B, 20C: Elemente des Körpers 20
- 21A, 21B: Elemente des Körpers 21
- 22, 122: Rückwand
- 23: Deckel
- 24: Türelemente
- 25: Scharnier
- 26: Rückwandmaterial
- 28: Leisten
- 30: Nuten, Kanten

### Literaturverzeichnis

[1] Patentschrift CH-677 029 A5
[2] Patentschrift CH-687 836 A5
[3] Offenlegungsschrift DE 198 49 399 A1
[4] Offenlegungsschrift DE 37 41 313 A1
[5] Offenlegungsschrift DE 199 48 754 A1
[6] Mool C. Gupta, Handbook of Photonics, CRC Press, Boca Raton 1997
[7] U. Tietze, Ch. Schenk, Halbleiterschaltungstechnik, 11. Auflage, 1. Nachdruck, Springer Verlag, Berlin 1999

## Patentansprüche

1. Windschutzvorrichtung (2) für eine Waage (1) mit einem eine Waagschale (15) umgebenden Wägeraum, mit einem den Wägeraum teilweise umfassenden, aus mindestens zwei flächigen Elementen (20A, 20B, 20C; 21A, 21B) bestehenden, windabweisenden Körper (20; 21), **dadurch gekennzeichnet, dass** der Körper (20; 21) lose handhabbar in wenigstens zwei verschiedenen Stellungen positionierbar ist, in denen je wenigstens eine Öffnung für den Zugriff in den Wägeraum geschaffen wird, wobei die resultierenden Öffnungen einen Zugriff in den Wägeraum aus unterschiedlichen Richtungen erlauben.

2. Windschutzvorrichtung nach Anspruch 1, **dadurch gekennzeichnet, dass** die Waage (1) ein Waagengehäuse (10) aufweist und der Körper (20; 21) auf dem Waagengehäuse (10) positionierbar ist.

3. Windschutzvorrichtung nach Anspruch 1 oder 2, **dadurch gekennzeichnet, dass** ein Sockel (13) vorhanden ist und der Körper (20; 21) auf dem Sockel (13) positionierbar ist.

4. Windschutzvorrichtung nach Anspruch 1, 2 oder 3, **dadurch gekennzeichnet, dass** der aus wenigstens zwei flächigen Elementen (20A, 20B, 20C; 21A, 21B) bestehende Körper (20; 21) einstückig gefertigt ist oder dass die Elemente (20A, 20B, 20C; 21A, 21B) fest oder gelenkig miteinander verbundenen sind.

5. Windschutzvorrichtung nach Anspruch 4, **dadurch gekennzeichnet, dass** die flächigen Elementen (20A, 20B, 20C; 21A, 21B) des Körpers (20; 21) zumindest annähernd ein L- oder V- oder U-Profil bilden oder in die Form eines L- oder V- oder U-Profils bewegbar sind.

6. Windschutzvorrichtung nach einem der Ansprüche 1 bis 5, **dadurch gekennzeichnet, dass** die Waage (1) eine den Wägeraum nach einer Seite begrenzende Rückwand (22, 122) aufweist, welche aus einem das Umgebungslicht diffus transmittierenden Material (26), insbesondere Mattglas, gefertigt ist.

7. Windschutzvorrichtung nach einem der Ansprüche 1 bis 6, **dadurch gekennzeichnet, dass** eine in Bezug auf den Wägeraumboden (14) annähernd senkrecht stehende Rückwand (22, 122) den Wägeraum nach einer Seite begrenzt.

8. Windschutzvorrichtung nach Anspruch 6 oder 7, **dadurch gekennzeichnet, dass** die Rückwand (22, 122) mit einer Anzeige (5), insbesondere einer hintergrundbeleuchteten Flüssigkristallanzeige versehen ist.

9. Windschutzvorrichtung nach Anspruch 6, 7 oder 8, **dadurch gekennzeichnet, dass** eine Beleuchtungsvorrichtung (6) vorhanden ist, zur Beleuchtung der Rückwand (22, 122).

10. Windschutzvorrichtung nach einem der Ansprüche 6 bis 9, **dadurch gekennzeichnet, dass** die Rückwand (22, 122) abnehmbar und gegen eine andere Rückwand auswechselbar ausgestaltet ist.

11. Windschutzvorrichtung nach einem der Ansprüche 6 bis 10, **dadurch gekennzeichnet, dass** ein an der Rückwand (22, 122) angelenkter Deckel (23) vorgesehen ist.

12. Windschutzvorrichtung nach einem der Ansprüche 1 bis 11, **dadurch gekennzeichnet, dass** weitere dreh- oder verschiebbare windabweisende Elemente, insbesondere Türelemente (24) vorgesehen oder montierbar sind, mittels derer die Öffnungen zum Wägeraum ganz oder teilweise verschliessbar sind.

13. Windschutzvorrichtung nach einem der Ansprüche 2, 7, 10 oder 11, **dadurch gekennzeichnet, dass** der Körper (20, 21) in dessen Stellungen an das Gehäuse (10) der Waage (1), den Sockel (13) und/oder die Rückwand (22, 122) und/oder den Deckel (23) angepasst ist.

14. Windschutzvorrichtung nach einem der Ansprüche 1 bis 13, **dadurch gekennzeichnet, dass** Befestigungsmittel (3) zum Halten des Körpers (20; 21) in den wählbaren Stellungen oder Positionshilfen (30) vorgesehen sind, mittels derer der Körper (20; 21) rasch präzise positionierbar ist.

15. Windschutzvorrichtung nach Anspruch 12, **dadurch gekennzeichnet, dass** die Rückwand (22) mit einer Kammer (11) verbunden ist und dass die dreh- oder verschiebbaren windabweisenden Elemente (23; 24) und/oder der faltbare Körper (20; 21) innerhalb der Kammer (11) deponierbar sind.

16. Waage (1) mit einer Windschutzvorrichtung (2) nach einem der Ansprüche 1 bis 15.

17. Waage nach Anspruch 16, **dadurch gekennzeichnet, dass** eine der Aufnahme der dreh- oder verschiebbaren windabweisenden Elemente (23; 24) dienende Kammer (11), welche mit einer Seite die Rückwand (22) des Wägeraums bildet, vorhanden ist.

18. Waage nach Anspruch 17, **dadurch gekennzeichnet, dass** die Rückwand mit Scharnieren (16) zur gelenkigen Befestigung der dreh- oder verschiebbaren windabweisenden Elemente (23; 24) versehen ist.

19. Waage nach einem der Ansprüche 16 bis 18, **dadurch gekennzeichnet, dass** einer oder mehrere Sensoren (7), Schalter oder optoelektronische Bauelemente vorgesehen sind, mittels derer die gewählte Stellung des Körpers (20; 21) und/oder der Körper (20; 21) selbst detektierbar ist.

## Claims

1. Draft protection device (2) for a balance (1) with a weighing pan (15) arranged in a weighing compartment, with a wind-blocking body (20; 21) that consists of at least two panel elements (20A, 20B, 20C; 21A, 21B) and partially encloses the weighing compartment, **characterized in that** the body (20; 21) can be loosely positioned by hand in at least two different orientations, wherein in each of said different orientations at least one opening is made available for access to the weighing compartment, and wherein the openings resulting from the different orientations allow access to the weighing compartment from different directions.

2. Draft protection device according to claim 1, **characterized in that** the balance (1) comprises a balance housing (10) and the body (20; 21) can be positioned on the balance housing (10).

3. Draft protection device according to claim 1 or 2, **characterized in that** a support base (13) is provided and the body (20; 21) can be positioned on the support base (13).

4. Draft protection device according to one of the claims 1, 2 or 3, **characterized in that** the body (20; 21) which consists of at least two panel elements (20A, 20B, 20C; 21A, 21B) is made integrally of one piece or that the panel elements (20A, 20B, 20C; 21A, 21B) are either rigidly connected or foldably hinged to each other.

5. Draft protection device according to claim 4, **characterized in that** the panel elements (20A, 20B, 20C; 21A, 21B) of the body (20; 21) form at least substantially an L-, V-, or U-profile or can be brought into the shape of an L-, V-, or U-profile.

6. Draft protection device according to one of the claims 1 to 5, **characterized in that** the balance (1) has a rear wall (22, 122) which delimits the weighing compartment on one side and which is made of a material (26) that diffuses the transmitted ambient light, particularly a frosted glass.

7. Draft protection device according to one of the claims 1 to 6, **characterized in that** a rear wall (22, 122) that rises substantially vertically from the floor (14) of the weighing compartment delimits the weighing compartment to one side.

8. Draft protection device according to one of the claims 6 or 7, **characterized in that** the rear wall (22, 122) is equipped with a display (5), in particular a backlit liquid crystal display.

9. Draft protection device according to one of the claims 6, 7 or 8, **characterized in that** an illumination device (6) is provided to light up the rear wall (22, 122).

10. Draft protection device according to one of the claims 6 to 9, **characterized in that** the rear wall (22, 122) is removable and configured so that it can be exchanged against another rear wall.

11. Draft protection device according to one of the claims 6 to 10, **characterized in that** a lid (23) is provided which is hinged on the rear wall (22, 122).

12. Draft protection device according to one of the claims 1 to 11, **characterized in that** further swiveling or sliding wind-blocking elements are provided or can be installed, in particular door elements (24), by means of which the openings into the weighing compartment can be entirely or partially closed.

13. Draft protection device according to one of the claims 2, 7, 10 or 11, **characterized in that** the body (20, 21) in its different positions conforms to the housing (10) of the balance (1), to the support base (13) and/or to the rear wall (22, 122) and/or to the lid (23).

14. Draft protection device according to one of the claims 1 to 13, **characterized in that** fastening means (3) are provided for holding the body (20; 21) in the selectable positions, or positioning guides (30) by means of which the body (20; 21) can be positioned quickly and precisely.

15. Draft protection device according to claim 12, **characterized in that** the rear wall (22) is connected to a chamber (11) and that the swiveling or sliding wind-blocking elements (23; 24) and/or the foldable body (20; 21) can be stored inside the chamber (11).

16. Balance (1) with a draft protection device (2) in accordance with one of the claims 1 to 15.

17. Balance according to claim 16, **characterized in that** a chamber (11) is provided, which has one side forming the rear wall (22) of the weighing compartment and which serves to receive the swiveling or sliding wind-blocking elements (23; 24).

18. Balance according to claim 17, **characterized in that** the rear wall is provided with hinges (16) for a hinged connection of the swiveling or sliding wind-blocking elements (23; 24).

19. Balance according to one of the claims 16 to 18, **characterized in that** one or more sensors (7), switches, or opto-electronic components are provided by means of which the selected position of the body (20; 21) and/or the body (20; 21) itself can be detected.

## Revendications

1. Dispositif pare brise (2) pour une balance (1) avec un espace de pesée entourant un plateau de pesée (15), avec un corps (20 ; 21) arrêtant le vent et entourant partiellement l'espace de pesée, composé d'au moins deux éléments minces (20A, 20B, 20C ; 21A, 21B), **caractérisé en ce que** le corps (20 ; 21) peut être manipulé librement pour être positionné en au moins deux positions différentes, dans lesquelles est créée à chaque fois au moins une ouverture pour l'accès à l'espace de pesée, les ouvertures en résultant permettant un accès dans l'espace de pesée des différentes directions.

2. Dispositif pare brise selon la revendication 1, **caractérisé en ce que** la balance (1) présente un boîtier de balance (10) et **en ce que** le corps (20 ; 21) peut être positionné sur le boîtier de balance (10).

3. Dispositif pare brise selon la revendication 1 ou 2, **caractérisé en ce qu'**il existe un socle (13) et **en ce que** le corps (20 ; 21) peut être positionné sur le socle (13).

4. Dispositif pare brise selon la revendication 1, 2 ou 3, **caractérisé en ce que** le corps (20 ; 21) composé d'au moins deux éléments minces (20A, 20B, 20C ; 21A, 21B) est réalisé d'un seul tenant ou **en ce que** les éléments (20A, 20B, 20C ; 21A, 21B) sont reliés entre eux de manière fixe ou articulée.

5. Dispositif pare brise selon la revendication 4, **caractérisé en ce que** les éléments minces (20A, 20B, 20C ; 21A, 21B) du corps (20 ; 21) forment au moins approximativement un profil en L ou en V ou en U, ou qu'ils peuvent être déplacés pour obtenir la forme d'un profil en L ou en V ou en U.

6. Dispositif pare brise selon l'une des revendications 1 à 5, **caractérisé en ce que** la balance (1) présente une paroi arrière (22, 122) délimitant l'espace de pesée sur un côté, réalisée dans un matériau (26) transmettant la lumière ambiante de manière diffuse, en particulier en verre dépoli.

7. Dispositif pare brise selon l'une des revendications 1 à 6, **caractérisé en ce qu'**une paroi arrière (22, 122) disposée sensiblement de manière perpendiculaire par rapport au fond (14) de l'espace de pesée délimite l'espace de pesée sur un côté.

8. Dispositif pare brise selon la revendication 6 ou 7, **caractérisé en ce que** la paroi arrière (22, 122) est pourvue d'un affichage (5), notamment d'un affichage à cristaux liquides rétroéclairé.

9. Dispositif pare brise selon la revendication 6, 7 ou 8, **caractérisé en ce qu'**il existe un dispositif d'éclairage (6) pour éclairer la paroi arrière (22, 122).

10. Dispositif pare brise selon l'une des revendications 6 à 9, **caractérisé en ce que** la paroi arrière (22, 122) est conçue de manière à pouvoir être retirée et remplacée par une autre paroi arrière.

11. Dispositif pare brise selon l'une des revendications 6 à 10, **caractérisé en ce qu'**un couvercle (23) articulé sur la paroi arrière (22, 122) est prévu.

12. Dispositif pare brise selon l'une des revendications 1 à 11, **caractérisé en ce que** d'autres éléments pivotants ou coulissants qui arrêtent le vent, notamment des éléments portes (24), sont prévus ou peuvent être montés, au moyen desquels les ouvertures vers l'espace de pesée peuvent être fermées en totalité ou en partie.

13. Dispositif pare brise selon l'une des revendications 2, 7, 10 ou 11, **caractérisé en ce que** le corps (20, 21), dans ses positions, est adapté au boîtier (10) de la balance (1), au socle (13) et/ou à la paroi arrière (22, 122) et/ou au couvercle (23).

14. Dispositif pare brise selon l'une des revendications 1 à 13, **caractérisé en ce** des moyens de fixation (3) sont prévus pour maintenir le corps (20 ; 21) dans les positions sélectionnables, ou que des aides au positionnement (30) sont prévus, au moyen desquelles le corps (20 ; 21) peut être positionné de manière rapide et précise.

15. Dispositif pare brise selon la revendication 12, **caractérisé en ce que** la paroi arrière (22) est reliée à une chambre (11) et **en ce que** les éléments pivotants ou coulissants qui arrêtent le vent (23 ; 24) et/ou le corps pliable (20 ; 21) peuvent être rangés à l'intérieur de la chambre (11).

16. Balance (1) munie d'un dispositif pare brise (2) selon l'une des revendications 1 à 15.

17. Balance selon la revendication 15, **caractérisée en ce qu'**il existe une chambre (11) dont un côté forme la paroi arrière (22) de l'espace de pesée et qui sert à recevoir les éléments pivotants ou coulissants qui arrêtent le vent (23 ; 24)

18. Balance selon la revendication 17, **caractérisée en ce que** la paroi arrière est pourvue de charnières (16) pour la fixation articulée des éléments pivotants ou coulissants qui arrêtent le vent (23 ; 24).

19. Balance selon l'une des revendications 16 à 18, **caractérisée en ce qu'**un ou plusieurs capteurs (7), commutateurs ou composants opto-électroniques sont prévus, au moyen desquels la position sélectionnée du corps (20 ; 21) et/ou des corps (20 ; 21) peut être détectée de manière autonome.
